# FASCICULE DE BREVET EUROPEEN

(11) **EP 0 461 036 B1**
(45) Date de publication et mention de la délivrance du brevet: **15.02.1995**
(21) Numéro de dépôt: 91401475.8
(22) Date de dépôt: 06.06.1991
(51) Int. Cl.: C12L 11/00

(54) **Procédé permettant la modification de la composition chimique de la face interne d'un fût, et machine mettant en oeuvre un tel procédé**
Verfahren zum Ändern der chemischen Zusammensetzung von der Innenfläche eines Fasses und Vorrichtung zur Durchführung des Verfahrens
Process for the modification of the internal face of a barrel and apparatus for performing the process

(30) Priorité: 07.06.1990 FR 9007102
(43) Date de publication de la demande: 11.12.1991
(73) Titulaire: SEGUIN MOREAU & CO., F-16100 Merpins (FR)
(72) Inventeur: Cordier, Bernard, F-16100 Cognac (FR)
(74) Mandataire: Casalonga, Axel

(56) Documents cités:
- DE-C- 589 214
- US-A- 2 140 841

## Description

La présente invention concerne un procédé permettant la modification de la composition chimique de la face interne d'un fût, et une machine permettant la mise en oeuvre d'un tel procédé.

Ce procédé, appelé communément et ci-après "bousinage", consiste en une chauffe et une humidification de la face interne de la coque des fûts, destinées à modifier par effet thermique la composition chimique des zones superficielles du bois et générer des arômes particuliers, qui seront extraits par les vins ou les alcools.

Un procédé de bousinage classique consiste à chauffer l'intérieur des fûts en y introduisant un foyer, à bois par exemple, et à humidifier la face interne du fût en frottant cette face interne à l'aide d'un chiffon humide.

Ce procédé ne permet pas de bien maîtriser l'opération de bousinage et les arômes ne seront pas bien définis et pas reproductibles d'un fût à l'autre.

La présente invention a pour but de maîtriser parfaitement l'opération de bousinage par un contrôle continu des différents paramètres de chauffe et d'humidification.

La présente invention permet ainsi d'obtenir exactement les arômes souhaités, de manière parfaitement reproductible d'un fût à l'autre et/ou d'une commande à l'autre pour un même client.

La présente invention a pour objet un procédé permettant la modification de la composition chimique de la face interne d'un fût, qui consiste à chauffer et à humidifier la face interne de la coque de ce fût.

Selon l'invention, le procédé consiste à chauffer et à humidifier alternativement, selon une puissance de chauffe et un débit de liquide déterminés, et pendant un temps déterminé, le chauffage étant réparti sur toute la hauteur de la coque.

Selon une caractéristique de l'invention, le procédé consiste à faire tourner la coque autour de son axe principal, afin d'assurer un bousinage uniforme sur toute la périphérie.

La présente invention a également pour objet une machine permettant la modification de la composition chimique de la face interne d'un fût.

Selon l'invention, elle comporte un support sur lequel la coque du fût repose verticalement, des moyens de chauffe et des moyens d'humidification déplaçables verticalement, selon l'axe principal du fût.

Selon une autre caractéristique de l'invention, les moyens de chauffe sont constitués de résistances électriques situées à l'extérieur d'un corps central, et les moyens d'humidification sont constitués d'un tube d'arrivée de liquide traversant ce corps central, d'une vanne alimentant le tube et d'injecteurs placés à l'extrémité du tube. Les injecteurs sont situés en-dessous des résistances, afin de ne pas les arroser lors de la phase d'humidification.

Selon encore une autre caractéristique de l'invention, le corps central, les résistances et le tube d'arrivée de liquide sont solidaires d'une potence montée sur un coulisseau mobile actionné par des moyens mécaniques, et la coque du fût repose sur un support entraîné en rotation par un moto-réducteur.

Il est décrit ci-après, à titre d'exemple et en référence aux figures annexées, un procédé et une machine de bousinage selon l'invention.
La figure 1 montre une machine selon l'invention,
la figure 2 montre, en coupe selon II de la figure 1, des détails de cette machine.

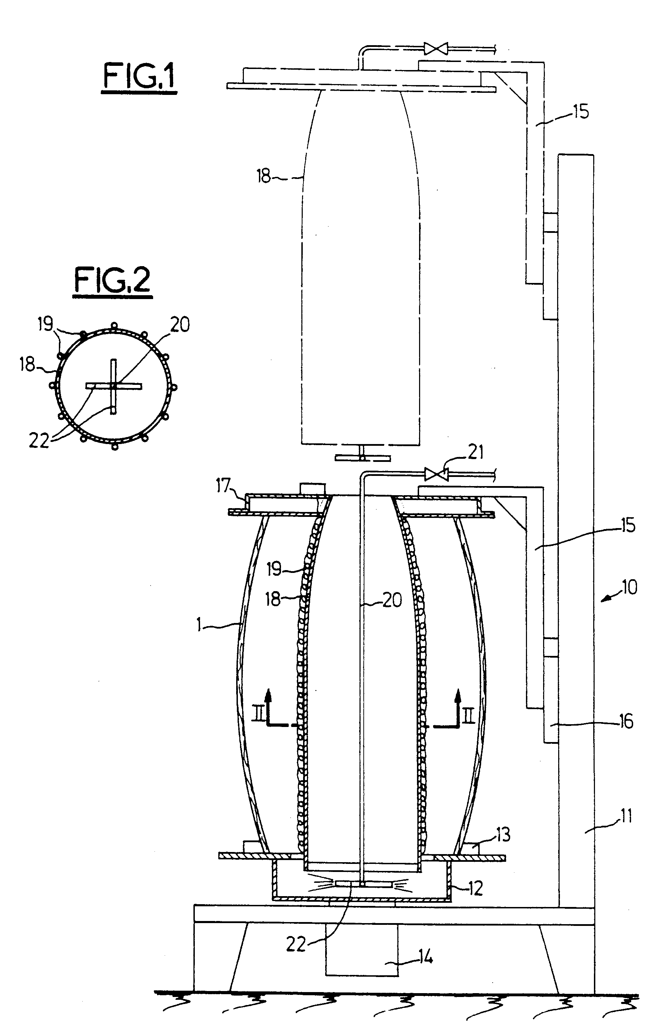

Comme cela est représenté dans la figure 1, la machine de bousinage 10 comporte un bâti 11 recevant à sa partie basse un plateau tournant 12, sur lequel repose la coque d'un fût 1. La coque est maintenue sur le plateau à l'aide de cales 13 et ce plateau est entraîné en rotation par un moto-réducteur 14.

La machine comporte en outre une potence 15 fixée sur un coulisseau 16 déplaçable verticalement le long du bâti 11, à l'aide d'un vérin sans tige non représenté, mais bien entendu, ce coulisseau peut être entraîné par tout moyen mécanique approprié, tel que, par exemple, un treuil, une vis sans fin, etc.

La potence 15 porte un flasque 17 sur lequel est fixé un corps central creux 18, en fibre céramique moulée par exemple. Autour de ce corps central 18 sont réparties uniformément douze résistances 19, comme cela est visible dans la figure 2. Un tube central 20 traverse le corps 18 sur toute sa hauteur et ce tube est alimenté en liquide d'humidification, tel que de l'eau, par une vanne 21. Ce tube comporte à son extrémité inférieure quatre injecteurs 22, comme cela est visible en figure 2. Ces injecteurs sont placés en-dessous des résistances pour ne pas arroser celles-ci lors de la phase d'humidification. Afin d'assurer, selon des cycles bien déterminés, une rotation du plateau 12, un déplacement vertical de la potence 15, un déclenchement et un contrôle de la puissance de chauffe, et enfin un déclenchement de l'arrivée d'eau, le moto-réducteur 14, le moyen d'entraînement du coulisseau 16, et les commandes des résistances et de la vanne 21, sont commandés par un automate programmable.

Une telle machine fonctionne de la manière suivante :
- on affiche les différents paramètres en fonction du bousinage à obtenir (puissance et temps de chauffe, quantité d'eau et temps d'humidification, nombre de cycles, ...);
- on positionne la coque du fût sur le plateau (ceci peut également être réalisé par une machine automatique);
- et la machine effectue automatiquement les opérations suivantes :
   . mise en rotation du plateau;
   . premier cycle :
      - abaissement de la potence;
      - chauffe;
      - coupure de la chauffe;
      - relevage de la potence et simultanément humidification;
   . deuxième cycle :
      - abaissement de la potence;
      - chauffe;
      - coupure de la chauffe;
      - relevage et humidification;
   . dernier cycle :
      - abaissement de la potence;
      - chauffe;
      - coupure de la chauffe;
      - relevage sans humidification;
   . arrêt du plateau;
   . sortie du fût.

Bien entendu, la phase d'humidification peut être réalisée au moment de l'abaissement de la potence, et, dans ce cas, il y aurait absence d'humidification lors de la première descente car il est préférable de démarrer un cycle par une phase de chauffe. La dernière phase du dernier cycle serait une chauffe, car il est aussi préférable de terminer un cycle par une phase de chauffe.

## Revendications

1. Machine permettant la modification de la composition chimique de la face interne d'un fût, caractérisée en ce qu'elle comporte un support (12) sur lequel la coque (1) d'un fût repose verticalement, des moyens de chauffe (19) et des moyens d'humidification (20,21,22) déplaçables verticalement, selon l'axe principal du fût.

2. Machine selon la revendication 1, caractérisée en ce que les moyens de chauffe sont constitués de résistances électriques (19) situées à l'extérieur d'un corps central (18).

3. Machine selon la revendication 1 ou 2, caractérisée en ce que les moyens d'humidification sont constitués d'un tube d'arrivée de liquide (20) traversant le corps central, d'une vanne (21) alimentant le tube, et d'injecteurs (22) placés à l'extrémité du tube.

4. Machine selon la revendication 3, caractérisée en ce que les injecteurs sont situés en-dessous des résistances, afin de ne pas arroser ces résistances lors de la phase d'humidification.

5. Machine selon l'une des revendications 1 à 4, caractérisée en ce que le corps central, les résistances et le tube d'arrivée de liquide sont solidaires d'une potence (15) montée sur un coulisseau mobile (16) actionné par des moyens mécaniques.

6. Machine selon l'une des revendications 1 à 5, caractérisée en ce qu'elle comporte un moto-réducteur (14) entraînant en rotation le support (12) sur lequel repose la coque (1) du fût.

7. Procédé permettant la modification de la composition chimique de la face interne d'un fût, utilisant la machine selon l'une des revendications 1 à 6 consistant à chauffer et à humidifier la face interne de la coque (1) de ce fût, caractérisé en ce qu'il consiste à chauffer et à humidifier alternativement, selon une puissance de chauffe et un débit de liquide déterminés, et pendant un temps déterminé, le chauffage étant réparti sur toute la hauteur de la coque.

8. Procédé selon la revendication 7, caractérisé en ce qu'il consiste à faire tourner la coque autour de son axe principal.

## Claims

1. Machine permitting the modification of the chemical composition of the inner face of a barrel, characterised in that it comprises a support (12) on which the shell (1) of a barrel rests vertically, and heating means (19) and moistening means (20,21,22) which are vertically displaceable with respect to the main axis of the barrel.

2. Machine according to Claim 1, characterised in that the heating means consist of electrical resistors (19) situated on the outside of a central body (18).

3. Machine according to Claim 1 or 2, characterised in that the moistening means consist of a liquid-inlet tube (20) passing through the central body, of a valve (21) supplying the tube, and of injectors (22) placed at the end of the tube.

4. Machine according to Claim 3, characterised in that the injectors are situated beneath the resistors so as not to wet these resistors during the moistening phase.

5. Machine according to Claims 1 to 4, characterised in that the central body, the resistors and the liquid-inlet tube are integral with a bracket (15) mounted on a movable slide (16) actuated by mechanical means.

6. Machine according to one of Claims 1 to 5,characterised in that it comprises a geared motor (14) which drives in rotation the support (12) on which the shell (1) of the barrel rests.

7. Process permitting the modification of the chemical composition of the inner face of a barrel, consisting in heating and in moistening the inner face of the shell (1) of this barrel , characterised in that it consists inalternately heating and moistening , according to a specified heating power and liquid flow rate , and for a specified time , the heating being distributed over the entire height of the shell.

8. Process according to Claim 1, characterised in that it consists in rotating the shell about its main axis.

## Patentansprüche

1. Maschine, die die Modifikation der chemischen Zusammensetzung der inneren Seite eines Fasses ermöglicht, dadurch gekennzeichnet, daß sie einen Träger (12), auf dem die Trommel (1) eines Fasses senkrecht ruht, Beheizungsmittel (19) und Befeuchtungsmittel (20,21,22) umfaßt, die senkrecht verschiebbar entlang der Hauptachse des Fasses sind.

2. Maschine nach Anspruch 1, dadurch gekennzeichnet, daß die Beheizungsmittel aus elektrischen Widerständen (19) bestehen, die außerhalb eines zentralen Körpers (18) angeordnet sind.

3. Maschine nach Anspruch 1 oder 2, dadurch gekennzeichnet, daß die Befeuchtungsmittel aus einem Flüssigkeitszuleitungsrohr (20), das den zentralen Körper durchquert, einem das Rohr speisenden Ventil (21), und Einspritzdüsen (22) bestehen, die am Ende des Rohres angeordnet sind.

4. Maschine nach Anspruch 3, dadurch gekennzeichnet, daß die Einspritzdüsen unterhalb der Widerstände angeordnet sind, um während der Befeuchtungsphase die Widerstände nicht zu besprühen.

5. Maschine nach einem der Ansprüche 1 bis 4, dadurch gekennzeichnet, daß der zentrale Körper, die Widerstände und das Flüssigkeitszuleitungsrohr fest mit einem Ausleger (15) fest verbunden sind, der auf einem beweglichen Schlitten (16) montiert ist, welcher durch mechanische Mittel betätigt wird.

6. Maschine nach einem der Ansprüche 1 bis 5, dadurch gekennzeichnet, daß sie einen Getriebemotor (14) aufweist, der den Träger (12) in Drehung versetzt, auf dem die Trommel (1) des Fasses ruht.

7. Verfahren, daß die Modifikation der chemischen Zusammensetzung der Innenseite eines Fasses ermöglicht, bestehend aus dem Beheizen und Befeuchten der Innenseite der Trommel (1) des Fasses, dadurch gekennzeichnet, daß es im abwechselnden Beheizen und Befeuchten mit einer jeweils bestimmten Heizleistung und Flüssigkeitsabgabe während einer vorbestimmten Zeitdauer besteht, wobei die Beheizung über die gesamte Höhe der Trommel verteilt wird.

8. Verfahren nach Anspruch 7, dadurch gekennzeichnet, daß es darin besteht, die Trommel um ihre Hauptachse drehen zu lassen.
